# EUROPÄISCHE PATENTSCHRIFT

(11) **EP 1 715 312 B1**
(45) Veröffentlichungstag und Bekanntmachung des Hinweises auf die Patenterteilung: **22.06.2011**
(21) Anmeldenummer: 05103138.3
(22) Anmeldetag: 19.04.2005
(51) Int. Cl.: G01G 21/28

(54) **Waage mit einem Windschutz**
Wind protection for a balance.
Balance pourvue d'une protection contre le vent

(43) Veröffentlichungstag der Anmeldung: 25.10.2006
(73) Patentinhaber: Mettler-Toledo AG, 8606 Greifensee (CH)
(72) Erfinder: Lüchinger, Paul, 8610, Uster (CH); Zehnder, Marc, 8605, Gutenswil (CH)

(56) Entgegenhaltungen:
- EP-A1- 1 617 191
- DE-U1- 8 507 282
- US-A- 4 798 250
- US-B1- 6 420 666
- US-B2- 6 603 081

## Beschreibung

Die Erfindung bezieht sich auf eine Waage mit einem Windschutz, der einen Wägeraum umgibt, und mindestens eine seitliche Wand aufweist, welche zum Öffnen und Schliessen des Windschutzes verschiebbar ausgestaltet ist.

Eine solche Waage findet bevorzugt Anwendung im Labor, wobei häufig Substanzen in ein sich auf einer Waagschale oder einem Wägegutträger einer Waage befindliches Gefäss abgefüllt werden. Das Abfüllen von Wägegut erfolgt im Labor meist von Hand. Das heisst, das pulverförmige oder flüssige Wägegut wird mittels eines Spatels oder eines Löffels aus einem Entnahmegefäss entnommen und bei geöffnetem Windschutz der Waage in ein Einwaagegefäss, welches mit seiner Öffnung nach oben ausgerichtet auf dem Wägegutträger steht, eingeführt. Dabei besteht die Gefahr, dass Wägegut auf dem Weg ins Einwaagegefäss verschüttet wird, auf den Wägegutträger fällt und versehentlich mit gewogen wird. Ferner reicht der Benutzer der Waage mit der Hand in den Wägeraum hinein und verursacht eine Erwärmung der das Einwaagegefäss umgebenden Luft. Zusätzlich kommt die Problematik des Luftzugs hinzu, wenn mindestens eine Wand des Windschutzes vollständig geöffnet ist, um den Zugang zum Einwaagegefäss überhaupt zu gewährleisten. Die Entnahme einer abzufüllenden Substanz aus einem Entnahmegefäss, welches sich ausserhalb des Wägeraums befindet, erfordert eine zeitaufwendige Handhabung, indem häufig mehrfach eine geöffnete Wand eines in der Regel vorhandenen Windschutzes der Waage passiert werden muss, wobei weitere Luftbewegungen das thermische Gleichgewicht im Wägeraum stören können. Nach dem Befüllen des Einwaagegefässes und Schliessen des Windschutzes dauert es erfahrungsgemäss einige Zeit, bis die Umgebungsbedingungen des Einwaagegefässes stabilisiert sind und beim anschliessenden Verwiegen der abgefüllten Substanz ein verlässliches Wägeresultat erzielt werden kann.

In den Labors der pharmazeutischen und chemischen Industrie ist das Abwiegen kleinster Mengen, vorwiegend in Form von pulverförmiger Substanzen, von zunehmender Bedeutung. Oft sind die Substanzen teuer oder gar toxisch. In regulierten Bereichen, wo Fehlergrenzen strikt eingehalten werden müssen, ist das sichere Einwägen kleinster Probenmengen von grösster Bedeutung. Die Dauer bis zum Erreichen stabiler Wägebedingungen kann sich somit nach dem Einfüllvorgang rasch von einigen Sekunden bis in den Bereich einiger Minuten verlängern, was einem effizienten Arbeitsablauf zuwider läuft.

Alternativ könnte das Gefäss auch ausserhalb der Waage befüllt werden. Zu diesem Zweck wird das Wägegut auf einem Wägepapier oder einem Wägeschiffchen verwogen und anschliessend in das betreffende Gefäss eingebracht. Dieses Vorgehen ist weniger wünschenswert, da der Benutzer nicht sicher sein kann, die Substanz vollständig transferiert zu haben, wodurch es wiederum günstiger werden könnte, das Befüllen direkt in ein sich innerhalb des Wägeraums auf der Waagschale befindliches Einwaagegefäss durchzuführen.

In der US 6 603 081 B2 wird eine Waage mit einem Wägeraum und einem eine Wägezelle enthaltenden, die Rückwand und den Boden des Wägeraums bildenden Waagengehäuse offenbart, welche einen Träger zur Aufnahme von Wägegut an einem Ausleger der Wägezelle aufweist. An der Rückwand des Wägeraums ist ein festes Haltesystem für das Befestigen von Wägeraum-Zubehör auf verschiedenen Höhen über dem Boden angebracht. Es kann eine Halterung für Laboreinrichtungen oder ein Zwischenboden am Haltesystem befestigt werden, wobei der Zwischenboden für die Ablage von Substanzgefässen, Werkzeugen etc. dienlich sein kann. Das Entnahmegefäss für die abzufüllende Substanz kann nun innerhalb des Wägeraums beispielsweise auf dem Zwischenboden abgestellt sein. Allerdings erfordern die Platzverhältnisse im Wägeraum dann ein besonders vorsichtiges Ausführen der Handbewegungen, damit das auf dem Zwischenboden abgestellte Entnahmegefäss nicht umkippt. Ausserdem ist das Problem, dass sich die Luft im Wägeraum zu stark erwärmt, wenn die ausführende Hand des Benutzers zu lange im Wägeraum verweilt, nicht gelöst.

Ein weiteres nicht gelöstes Problem betrifft die Flexibilität einer Waage und die Bedingungen derselben beim Abfüllen von Wägesubstanz hinsichtlich der zu verwendenden Einwaagegefässe. Für an den Einwaagevorgang anschliessende Analysen oder Reaktionen werden verschiedenste Einwaagegefässe unterschiedlicher Grösse benötigt, unter anderem Messkolben mit langem Hals, Erlenmeyerkolben oder Reagenzgläser.

In der DE 87 16 977 U1 wird eine Waage beschrieben, die das Problem des Vermeidens von internen Luftströmungen innerhalb eines geschlossenen Windschutzes dadurch löst, dass die Höhe des Windschutzes möglichst niedrig gewählt wird und im Falle der Verwendung grösserer Gefässe die Höhe des Windschutzes derart erweitert wird, dass ein nach unten offener Aufsatz an der Oberseite des Windschutzes angebracht werden kann, der in die Führungsschienen der Abdeckscheibe einrasten kann. In besonderer Ausführung besitzt dieser Aufsatz an seiner Oberseite eine verschliessbare Öffnung, damit ein auf der Waagschale stehender Messkolben befüllt werden kann.

Nachteilig beim Befüllen, insbesondere mit pulverförmigen Substanzen, in ein enghalsiges in einer Waage gemäss der DE 87 16 977 U1 platziertes Einwaagegefäss ist, dass das Abfüllen von oben ergonomisch äusserst ungünstig ist und daher die Gefahr eines Verschüttens der Substanz besteht.

Vor dem Hintergrund der oben beschriebenen Probleme ist es die Aufgabe der Erfindung, eine Waage dahingehend zu verbessern, dass beim Abfüllen von Substanzen, insbesondere Pulvern in ein sich auf dem Wägegutträger befindliches Einwaagegefäss die Dauer bis zum Erreichen stabiler Umgebungsbedingungen des Einwaagegefässes möglichst kurz ist. Eine weitere Aufgabe besteht darin, das Befüllen des Einwaagegefässes ergonomisch zu gestalten.

Diese Aufgabe wird mit den Merkmalen des Anspruchs 1 gelöst, wobei eine Waage mit einem Windschutz versehen ist, der einen Wägeraum umgibt und mindestens eine seitliche Wand aufweist, welche zum Öffnen und Schliessen des Windschutzes verschiebbar ausgestaltet ist. Erfindungsgemäss sind in der seitlichen Wand eine Zugangsöffnung und ein Verschlusselement zum Verschliessen der Zugangsöffnung vorhanden. Dabei sind mittels des Verschlusselements die Grösse und/oder die Lage der Zugangsöffnung in der seitlichen Wand veränderbar.

Daher werden Luftströmungen in den oder aus dem Wägeraum während des Befüllens des Einwaagegefässes weitgehend vermieden und stabile Wägebedingungen können nach dem Befüllen, wenn die Zugangsöffnung mittels des Verschlusselements verschlossen wurde, rasch erreicht werden. Infolgedessen wird die Messsicherheit wesentlich erhöht, insbesondere wenn mit kleinen Mengen an zu verwiegender Substanz gearbeitet wird. Es ist insofern von Vorteil kleine Substanzmengen zu verarbeiten, beispielsweise beim Erzeugen von Lösungen, da gerade soviel Lösung erzeugt wird, wie benötigt wird und kein Abfall anfällt. Dies erfordert jedoch das fehlerfreie, präzise Verwiegen kleiner Substanzmengen.

Die Zugangsöffnung in der seitlichen Wand wird nur gerade so gross gehalten, wie es für das Abfüllen in die Öffnung des Einwaagegefässes unbedingt erforderlich ist. Dabei befindet sich die Öffnung des Einwaagegefässes möglichst nahe der Zugangsöffnung. Bevorzugt ist die Längsachse des Einwaagegefässes dabei gegenüber der Vertikalendas heisst der Richtung der Wirkung der Schwerkraft -, gekippt. Das Einwaagegefäss befindet sich während des Befüllens innerhalb des nahezu vollständig geschlossenen Windschutzes.

Bevorzugt ist das Verschlusselement auf der Aussenseite der seitlichen Wand angebracht. Daher kann, wenn es sich dabei um eine bewegliche Wand des Windschutzes handelt, diese problemlos zum Öffnen und Schliessen des Wägeraums verschoben werden, ohne dass das Verschlusselement die Bewegung der Wand behindern würde.

Für ein längliches Einwaagegefäss ist eine Vorrichtung zum Abstützen desselben nahe seiner Öffnung zum Befüllen vorhanden, welche bevorzugt als Abstützbügel, der am Waagschalenträger befestigt ist, ausgestaltet ist.

In einer vorteilhaften Ausführungsform umfasst die Waage eine durch Durchführungen in der Rückwand des Wägeraums reichende Koppelanordnung. Ein Wägegutträger ist abnehmbar an der Koppelanordnung angebracht, wodurch dieser problemlos gegen einen anderen Wägegutträger ausgetauscht werden kann und somit die Flexibilität der Waage massiv erhöht.

In besonders vorteilhafter Weiterbildung weist der Wägegutträger einen Wägegutaufnahmeaufsatz sowie eine Verstelleinrichtung auf. Der Wägegutaufnahmeaufsatz ist ebenfalls austauschbar und ist im Wägeraum bezüglich der Lage der Koppelanordnung vermittels der Verstelleinrichtung des Wägegutträgers translatorisch verschiebbar und in verschobener Lage positionierbar. Dabei sind insbesondere die Ausrichtung und der Ort des Wägegutaufnahmeaufsatzes im Wägeraum bezüglich der Lage der Koppelanordnung vermittels der Verstelleinrichtung des Wägegutträgers durch eine translatorische Verschiebung und eine Rotation einstellbar. In einer besonderen Ausgestaltung ist der Wägegutaufnahmeaufsatz als Gitter mit abgebogenen Gitterstäben ausgestaltet.

Ein solcher Wägegutaufnahmeaufsatz kann verkippt werden. Infolgedessen lässt sich ein Einwaagegefäss mit einer Öffnung zum Befüllen derart auf dem Wägegutaufnahmeaufsatz des Wägegutträgers platzieren, dass das Einwaagegefäss bezüglich der Vertikalen schräg ausgerichtet ist, und dass die Öffnung zum Befüllen sich ohne Berührungskontakt zur seitlichen Wand, in unmittelbarer Nähe der Zugangsöffnung befindet, wobei bei geöffnetem Verschlusselement ein direkter Zugang durch die Zugangsöffnung zur Öffnung zum Befüllen besteht.

Die Hand des Benutzers der Waage gelangt also nicht in den Wägeraum, folglich kann sich die Wägeraumtemperatur beim Befüllen eines auf dem Wägegutträger befindlichen Einwaagegefässes auch nicht erhöhen. Daher stellen sich stabile Wägebedingungen rasch ein. Die ergonomisch besonders vorteilhafte Schrägstellung des Einwaagegefässes sowie der kurze Weg zwischen einem in der Hand zu haltenden Entnahmegefäss und der Öffnung des Einwaagegefässes verhindern ausserdem, dass Wägegut verschüttet wird.

Ferner erlaubt es die Flexibilität, die die verschliessbare Zugangsöffnung einerseits und die Positionierung des Wägegutaufnahmeaufsatzes im Wägeraum andererseits ermöglichen, die Schrägstellung des Einwaagegefässes von der horizontalen Lage bis in eine nahezu vertikale Ausrichtung frei zu wählen. Damit kann eine Anpassung der Anordnung zum Befüllen eines auf dem Wägegutträger einer Waage platzierten Einwaagegefässes an die Rieselfähigkeit eines einzufüllenden Pulvers erfolgen.

In besonders günstiger Ausbildung der Waage weist das Verschlusselement zwei in einem Führungsschienenpaar in einer Dimension bewegbaren Schieber auf. Alternativ weist das Verschlusselement eine Irisblende auf, die auf einem in einem Führungsschienenpaar in einer Dimension bewegbare Schieber angebracht ist, wobei der Schieber im Bereich der Irisblende eine Öffnung aufweist. Das Führungsschienenpaar ist an der Aussenseite der seitlichen Wand angebracht. Eine solche seitliche Wand kann von der Waage abgenommen werden und gegen eine andere seitliche Wand ausgetauscht werden, wobei bereits sich beim Kunden befindliche Waagen mit einer Zugangsöffnung und einem Verschlusselement im Windschutz nachgerüstet werden können.

Die Zeichnungen erläutern die Erfindung anhand eines Ausführungsbeispieles. Dabei zeigt:
- Fig. 1: eine perspektivische Darstellung der Waage aus der Sicht von schräg vorne mit einem im Wägeraum auf dem Waagschalenträger befindlichen Messkolben,
- Fig. 2: eine perspektivische Darstellung der Waage aus der Sicht von schräg vorne mit einem anderen im Wägeraum auf dem Waagschalenträger befindlichen weiteren Messkolben,
- Fig. 3: eine perspektivische Darstellung der Waage in Ansicht aus dem Wägeraum, wobei ein Benutzer der Waage mittels eines Löffels Wägegut in den Messkolben einbringt
- Fig. 4: eine perspektivische Darstellung des Wägegutträgers mit einem Wägegutaufnahmeaufsatz an welchen eine Abstützvorrichtung für längliche Gefässe befestigt ist, und
- Fig. 5: eine alternative Ausführungsform eines Verschlusselements.

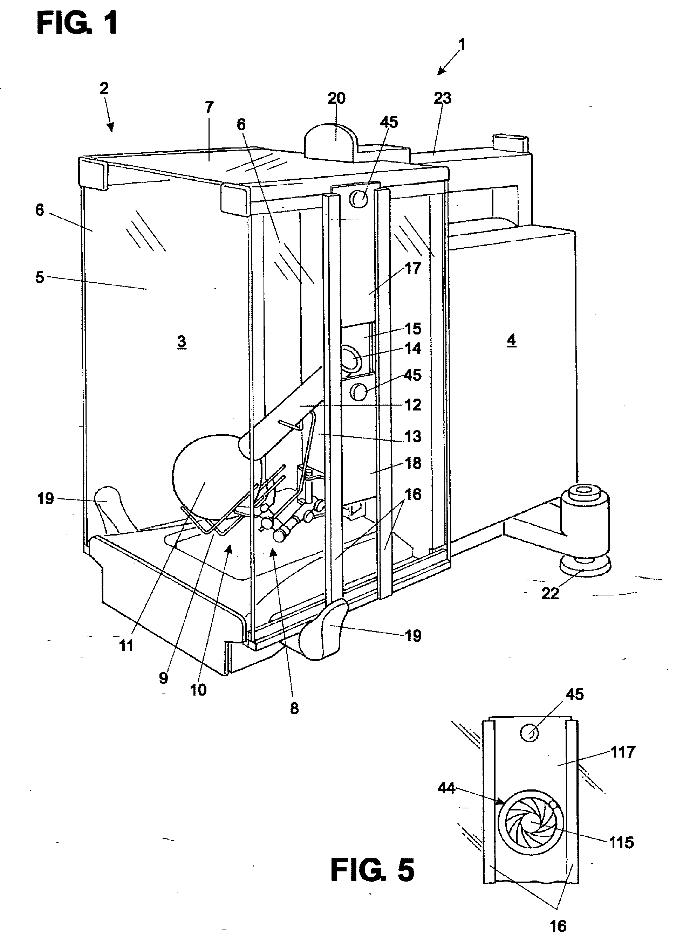

In der Figur 1 ist eine dreidimensionale Darstellung einer Waage 1 aus der Sicht von schräg vorne gezeigt. Der Begriff "vorne" bezieht sich in diesem Zusammenhang auf die Perspektive eines Benutzers der Waage 1, dem beim Arbeiten der von einem Windschutz 2 umgebene Wägeraum 3 zugewandt ist, wodurch das Waagengehäuse 4 dem Benutzer abgewandt als "hinten" bzw. "hinter dem Wägeraum 3 angeordnet, bezeichnet wird. Eine Anzeige- und Bedieneinheit ist in der Regel vorne an der Waage 1 angeordnet, wurde in der Figur 1 jedoch, da sie nicht Gegenstand der Erfindung ist, aus Gründen der Übersichtlichkeit weg gelassen. Die Waage 1 steht auf drei Füssen 22, von denen in der Figur 1 lediglich einer zu sehen ist. Ein Haltegriff 23 kann dazu verwendet werden, die Waage 1 von ihrer Unterlage abzuheben, beispielsweise um diese Unterlage zu reinigen.

Der Windschutz der Waage weist hier eine Vorderwand 5 und zwei Seitenwände 6 sowie eine Abdeckwand 7 auf. Diese Wände bestehen vorwiegend aus Glas oder durchsichtigem Kunststoff. Die Vorderwand 5 ist feststehend angeordnet, die Seitenwände 6 und die Abdeckwand 7 können von Hand oder motorisch angetrieben nach hinten verschoben werden, um den Wägeraum 3 zu öffnen. Dabei überdeckt dann die jeweils geöffnete Seitenwand 6 und/oder Abdeckwand 7 das Waagengehäuse 4. Zum Verschieben der bewegbaren Wände 6, 7 dienen die Griffe 19, 20.

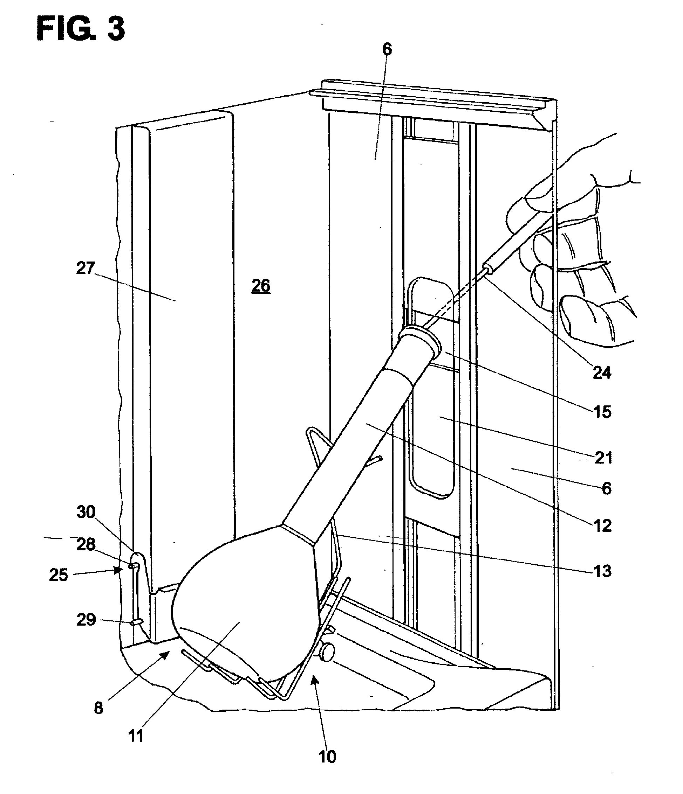

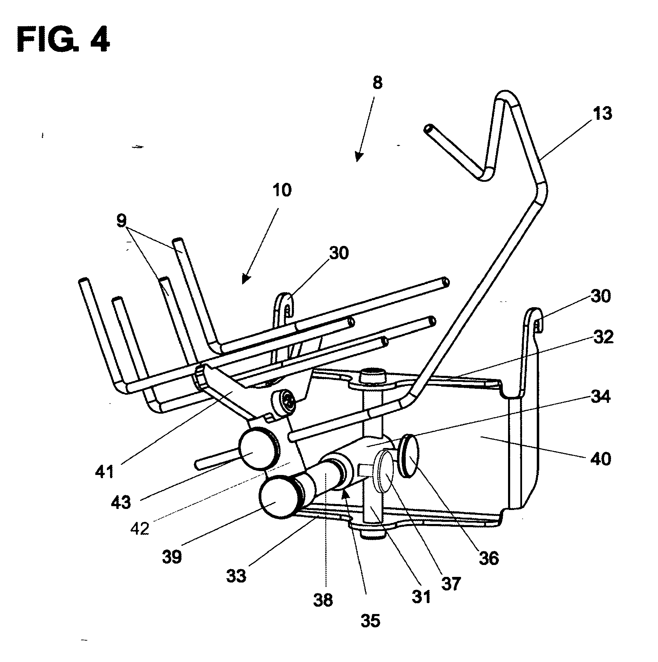

Innerhalb des Wägeraums 3 ist ein Wägeguträger 8 vermittels einer Koppelanordnung (siehe Figuren 3 bis 5) abnehmbar mit einem hier nicht sichtbaren Ausleger der im Waagengehäuse 4 befindlichen Wägezelle verbunden. Der Wägegutträger 8 weist eine Verstelleinrichtung mit verschiedenen Verstellelementen zur Positionierung des Wägegutaufnahmeaufsatzes 10, welcher in der Figur 1 als Gitter mit um 90° abgebogenen Gitterstäben 9 ausgebildet ist, auf. Die detaillierte Beschreibung dieses Wägegutträgers 2 erfolgt weiter unten anhand der Figur 4.

Der auf dem Wägegutaufnahmeaufsatz 10 befindliche Messkolben 11 ist unter einem spitzen Winkel gegenüber der Vertikalen - das heisst der Richtung der Wirkung der Schwerkraft - gelagert. Sein langer Hals 12 ruht auf einer am Wägegutträger 8 angebrachten Abstützvorrichtung in Form eines Abstützbügels 13. Die relativ enge Öffnung 14 des Messkolbens 11 befindet sich nahe einer Zugangsöffnung 15 in der Seitenwand 6. Die Öffnung kann mittels eines aus zwei in einem Führungsschienenpaar 16 in einer Dimension bewegbaren Schiebern 17, 18, wodurch ein Verschlusselement gebildet wird, geöffnet und geschlossen werden. Das Öffnen und Schliessen der Zugangsöffnung 15 mittels der Schieber 17, 18 erfolgt mit Hilfe der Verschiebegriffe 45, wobei die Grösse der Zugangsöffnung 15 entsprechend der Öffnung 14 des Messkolbens 11 variierbar ist. Die Schieber 17, 18 können aus Metall oder aus Glas bestehen. Die Schieber 17, 18 sind in dem Führungsschienenpaar 16 mit Hilfe von Federbügeln (hier nicht gezeigt) derart geführt, dass sie in der jeweils eingestellten Position stabilisiert verbleiben. Damit kann ein Benutzer der Waage 1, ohne die Seitenwand 6 zu öffnen, Wägegut in den Messkolben 11 einfüllen. Ferner kann die Position der Zugangsöffnung 15 in ihrer Höhe gegenüber der Unterkante der Seitenwand 6 entlang dem Führungsschienenpaar 16 verändert werden.

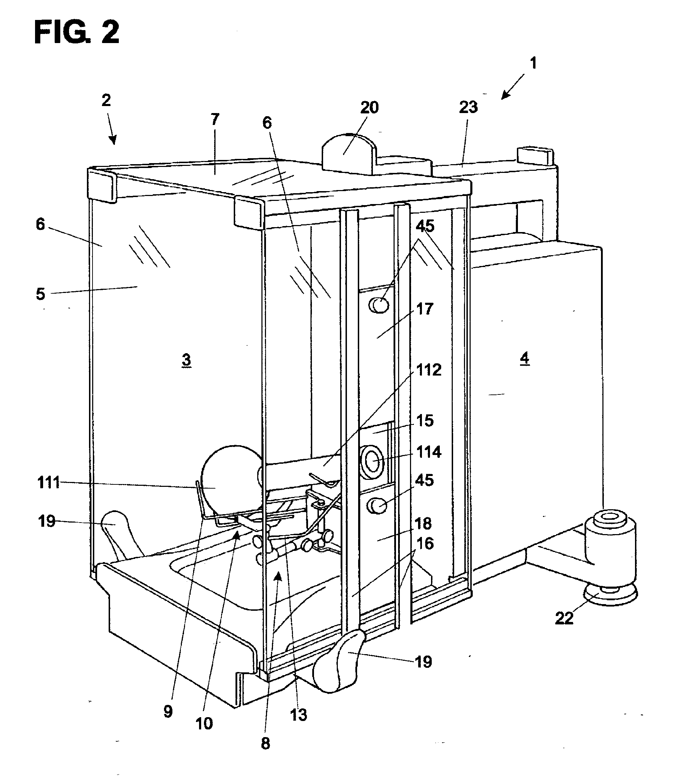

In der Figur 2 ist in zu Figur 1 analoger Darstellung gezeigt, dass die Anordnung einer Zugangsöffnung 15 in der Seitenwand 6 der Waage 1, welche mittels eines Verschlusselements geöffnet und verschlossen werden kann für das Befüllen von Messkolben 111 - oder auch anderen Einwaagegefässen, wie Reagenzgläser, Erlenmeyerkolben, etc. geeignet ist. Ein kleiner Messkolben 111 ist beinahe liegend auf dem Wägegutaufnahmeaufsatz 10 des Wägegutträgers 8 gelagert und wird von der Halterung 13 gestützt. Diese Positionierung des Messkolbens 111 erlaubt ein ergonomisch äusserst günstiges Einbringen von Wägegut, beispielsweise eines Pulvers, in die Öffnung 114 des kleinen Messkolbens 111 von aussen, da sich deren Öffnung 114 nahe der Zugangsöffnung 15 befindet und ihre Ausrichtung ein Einführen eines Spatels oder Löffels von schräg oben ermöglicht.

Das Befüllen eines Messkolbens 11 ist in der Figur 3 dargestellt, welche als Ausschnittzeichnung eine Sicht aus dem Wägeraum 3 auf die Zugangsöffnung 15 der Seitenwand 6 zeigt. Die Seitenwand 6 verfügt über eine längliche Aussparung 21, die sich etwa über das mittlere Drittel der Höhe der Seitenwand 6 erstreckt und somit einen Bereich möglicher Zugangsöffnungen 15 bildet. Es ist ein Leichtes für den Benutzer der Waage 1 das Wägegut mittels eines Löffels 24 schräg von oben durch die Zugangsöffnung 15 in die Öffnung 14 am Hals 12 des Messkolbens 11 einzuführen. Die Hand des Benutzers bleibt dabei vollständig ausserhalb des Wägeraums 3. Dadurch wird ein Verschütten des Wägeguts innerhalb des Wägeraums 3 weitgehend vermieden. Ferner kann keine Handwärme die Luft im Wägeraum 3 erwärmen und die Gefahr eines Luftzugs ist erheblich geringer gegenüber einem Befüllen eines auf dem Wägegutaufnahmeaufsatz 10 des Wägegutträgers 8 platzierten Messkolbens 11 bei vollständig geöffneter Seitenwand 6. Infolgedessen stellen sich, nachdem mittels der Schieber 17, 18 die Zugangsöffnung 15 verschlossen wurde sehr rasch stabile Wägebedingungen im Wägeraum 3 ein, in Verbindung mit einer stabilen und sicheren Anzeige des Wägeergebnisses.

Die Figur 3 zeigt, zumindest teilweise, die Aufhängung des Wägegutträgers 8 an die Koppelanordnung 25, welche sich nahe der Rückwand 26 befindet. Die Rückwand 26 weist einen säulenartigen Vorsprung 27 auf, in dessen unterem Bereich sich die Koppelanordnung 25 des Wägegutträgers 8 befindet. Diese umfasst beidseits aus dem Vorsprung 27 herausragende, mit einem Ausleger der Wägezelle (hier nicht sichtbar, da hinter der Rückwand 26 angeordnet) verbundene Haltebolzen 28 mit daran anbringbaren hakenförmigen Auslegern 30 des Wägegutträgers 8. Ein weiterer Haltebolzen 29 dient der Abstützung des Wägegutträgers 8. Im Detail ist diese Koppelanordnung in der US 6 557 391 B2 beschrieben und soll an dieser Stelle nicht naher ausgeführt werden.

Die Figur 4 zeigt in perspektivischer Darstellung einen Wägegutträger 8. Die hakenförmigen Ausleger 30 des Koppelelements 25 sind über einen etwa rechteckförmigen Verbindungsbereich 40 miteinander verbunden. Mittig des Verbindungsbereichs 40 ist eine Stange 31 zwischen einer oberen und einer unteren Befestigungslasche 32, 33 eingespannt, wobei die Stange 31 in der für den Betrieb aufgestellten Waage vertikal ausgerichtet ist. Die Stange 31 reicht mit etwas Spiel durch eine Bohrung der Hülse 34 eines entlang seiner Achse ausfahrbaren Stativs 35. Dabei verläuft die Bohrung orthogonal zur Längsachse der Hülse 34. Das Stativ 35 ist somit entlang der Stange 31 auf und ab bewegbar und gleichzeitig um die Stange 31 verschwenkbar. Der Fixierung einer Position des Stativs dient eine erste Feststellschraube 36, die orthogonal zur Stange 31 von der Mantelfläche der Hülse 34 in diese eindringt und die Stange 31 darin fixiert. Dadurch ist die Position des Wägegutaufnahmeaufsatzes 10 im Wägeraum 3 vermittels einer Translationsbewegung höhenverstellbar und vermittels einer Rotationsbewegung um die durch die Längsachse der Stange 31 verlaufende Achse verstellbar.

Das Stativ 35 weist einen Verlängerungsstab 38 auf, der in die Hülse 34 einfahrbar und aus dieser ausfahrbar ist, wobei an dessen der Stange 31 gegenüber liegendem Ende der Wägegutaufnahmeaufsatz 10 befestigbar ist. Der Fixierung des Verlängerungsstabs 38 in der Hülse 34 dient eine zweite Feststellschraube 37, welche parallel zur ersten Feststellschraube 36 angeordnet ist. Dadurch ist die Position des Wägegutaufnahmeaufsatzes 10 im Wägeraum 3 vermittels einer translatorischen Verschiebung in einer Richtung orthogonal zur Rückwand 26 einstellbar. Wenn nun gleichzeitig eine Rotationsbewegung um die durch die Längsachse der Stange 31 verlaufende Achse möglich ist, so kann der Wägegutträger 8 in einer horizontal verlaufenden Ebene positioniert werden. Ferner ist die Position des Wägegutaufnahmeaufsatzes 10 im Wägeraum 3 vermittels einer Rotationsbewegung um die durch die Längsachse des Stativs 35 gekennzeichnete Achse verstellbar.

Das Stativ 35 stellt ein Verbindungselement zwischen der Stange 31 und dem Wägegutaufnahmeaufsatz 10 dar. An dem der Koppelanordnung 25 abgewandten Ende des Verlängerungsstabs 38 ist der Wägegutaufnahmeaufsatz 10 befestigt. Der Wägegutaufnahmeaufsatz 10 ist im Verlängerungsstab 38 drehbar gelagert; dem Fixieren dient eine dritte Feststellschraube 39.

Der Wägegutaufnahmeaufsatz 10 ist in Form eines Gitters mit um 90° abgebogenen und parallel zueinander verlaufenden Gitterstäben 9 ausgebildet. Dadurch bilden die Gitterstäbe 9 einen Auflagebereich für einen hier nicht gezeigten Messkolben 11, 111, wobei dieser bevorzugt mit seiner Mantelfläche auf dem Gitter aufliegt. Um ein Verrutschen des Einwaagegefässes zu vermeiden, können die einzelnen Gitterstäbe 9 mit einem Ring oder einer Hülse aus Kunststoff (hier nicht gezeigt) umfasst sein. Als entsprechende Massnahme können die Gitterstäbe 9 jedoch auch zumindest teilweise mit vorzugsweise elektrisch leitendem Polymermaterial beschichtet sein. Auf der dem Auflagebereich abgewandten Seite des Gitters sind die Gitterstäbe 9 an einer bogenförmigen Basis 41 befestigt. Die bogenförmigen Basis 41 ist über einen zylinderförmigen Halter 42 mit dem Stativ 35 verbunden.

Der Wägegutaufnahmeaufsatz 10 kann nun vermittels Lösen der zweiten Feststellschraube 37 mitsamt dem Verlängerungsstab 38 um dessen Achse verdreht werden, so dass der Auflagebereich der Gitterstäbe 9 leicht gegen die Horizontale geneigt ist. Das heisst, das um 90° abgebogene Ende der Gittestäbe 9 liegt tiefer, als deren gerades Ende. Auf diese Weise lässt sich ein Einwaagegefäss, ohne dass es aus dem Wägegutaufnahmeaufsatz 10 kippen kann, dort platzieren. Für längliche Einwaagegefässe ist eine Abstützvorrichtung in Form eines Abstützbügels 13 vorhanden, welche den zylinderförmigen Halter 42 durchdringt und mittels einer vierten Feststellschraube 43 fixiert ist. Wird diese gelöst, so kann die Halterung 13 sowohl verschoben als auch im zylinderförmigen Halter 42 gedreht oder, falls sie nicht benötigt wird, entfernt werden. Damit wird die Abstützung des Einwaagegefässes je nach Lage seines Schwerpunkts optimiert.

Durch Rotation um die entlang der Stange 31 verlaufende Achse lässt sich der Wägegutaufnahmeaufsatz 10 an eine nahezu beliebige Stelle im unteren Bereich des Wägeraums 3 bringen, insbesondere, wenn von der Ausziehbarkeit des Verlängerungsstabs 37 des Stativs 35 und von der Höhenverstellbarkeit entlang der Stange 31 Gebrauch gemacht wird.

Die Figur 5 zeigt eine alternative Ausführungsform eines Verschlusselements. Auf einem Schieber 117, welcher im Führungsschienenpaar 16 verschieblich geführt werden kann, ist eine Irisblende 44 angeordnet, mittels derer ein Loch im Schieber 117 verschlossen werden kann. Durch verschieben des Schiebers 117 kann nun die Irisblende an eine beliebige Stelle der durch den Schieber verdeckten Aussparung 21 in der Seitenwand 6 verschoben werden. Damit ist die Zugangsöffnung 115 hinsichtlich ihrer Grösse und Position variabel.

Es versteht sich von selbst, dass weitere hier nicht näher beschriebene Verschlusselemente zum Einsatz kommen können. Denkbar sind beispielsweise lamellenförmige Vorrichtungen, die ähnlich einem Rollladen an ihren jeweiligen Enden auf beziehungsweise abgerollt werden können. Auch müssen die Führungseinrichtungen für die Änderung der Position eines Verschlusselements nicht zwingend vertikal ausgerichtet sein, ebenso denkbar, wenngleich weniger günstig, sind horizontal angeordnete Führungseinrichtungen, wobei dann die Aussparung in der Seitenwand ebenfalls horizontal ausgerichtet sein müsste. Ein motorisches Öffnen und Schliessen der Zugangsöffnung soll an diese Stelle ebenfalls in Betracht gezogen werden.

Selbstverständlich ist auch die Anordnung einer Zugangsöffnung und ein Verschlusselement zum Verschliessen der Zugangsöffnung nicht auf eine Seitenwand 6 beschränkt, vielmehr können weitere und/oder alternative Zugangsöffnungen mit Verschlusselement in der gegenüberliegenden Seitenwand 6 oder gar der Vorderwand 5 des Windschutzes angeordnet werden. Je nachdem, ob der Abfüllvorgang in ein Einwaagegefäss mit der linken oder rechten Hand ausgeführt wird, kann nämlich der Wägegutaufnahmeaufsatz mit dem Einwaagegefäss in die entsprechende Position gedreht werden, so dass die Öffnung des Einwaagegefässes nahe der Zugangsöffnung platziert ist, das heisst entweder zur rechten oder linken Seitenwand 6 oder gar zur Vorderwand 5 weisend.

Die Waage muss nicht zwingend mit einem etwa quaderförmigen Windschutz ausgestattet sein. Eine Vorrichtung zur Schaffung einer Zugangsöffnung mit einem Verschlusselement, wie oben beschrieben, lässt sich auch in einem dreieckigen, sechs- oder achteckigen Windschutz mit vertikalen oder unter einem Winkel zur Vertikalen ausgerichteten Seitenwänden realisieren. Insbesondere sollen auch Waagen mit einem Windschutz mit zylinderförmigen Seitenwänden in die betrachtete Erfindung eingeschlossen sein.

### Bezugszeichenliste

- 1: Waage
- 2: Windschutz
- 3: Wägeraum
- 4: Waagengehäuse
- 5: Vorderwand
- 6: Seitenwand
- 7: Abdeckwand
- 8: Wägegutträger
- 9: Gitterstäbe
- 10: Wägegutaufnahmeaufsatz
- 11, 111: Messkolben
- 12: Hals
- 13: Abstützbügel, Abstützvorrichtung
- 14, 114: Öffnung des Messkolbens
- 15,115: Zugangsöffnung
- 16: Führungsschienenpaar
- 17, 117: Schieber
- 18: Schieber
- 19: Griff
- 20: Griff
- 21: Aussparung
- 22: Fuss
- 23: Haltegriff
- 24: Löffel
- 25: Koppelanordnung
- 26: Rückwand
- 27: Vorsprung
- 28: Haltebolzen
- 29: Haltebolzen
- 30: Ausleger des Wägegutträgers
- 31: Stange
- 32: obere Befestigungslasche
- 33: untere Befestigungslasche
- 34: Hülse
- 35: Stativ
- 36: erste Feststellschraube
- 37: zweite Feststellschraube
- 38: Verlängerungsstab
- 39: dritte Feststellschraube
- 40: rechteckförmiger Verbindungsbereich
- 41: bogenförmige Basis
- 42: zylinderförmiger Halter
- 43: vierte Feststellschraube
- 44: Irisblende
- 45: Verschiebegriff

## Patentansprüche

1. Waage (1) mit einem Windschutz (2), der einen Wägeraum (3) umgibt, und mindestens eine seitliche Wand (5, 6) aufweist, welche zu Öffnen und Schliessen des Windschutzes (2) verschiebbar ausgestaltet ist, **dadurch gekennzeichnet, dass** in der seitlichen Wand (5, 6) eine Zugangsöffnung (15, 115) und ein Verschlusselement (17, 18, 44) zum Verschliessen der Zugangsöffnung (15, 115) vorhanden sind, wobei mittels des Verschlusselements (17, 18, 44) die Grösse und/oder die Lage der Zugangsöffnung (15, 115) in der seitlichen Wand (5, 6) variierbar sind.

2. Waage (1) nach Anspruch 1, **dadurch gekennzeichnet, dass** das Verschlusselement (17, 18, 44) auf der Aussenseite der seitlichen Wand (5, 6) angebracht ist.

3. Waage (1) nach Anspruch 1 oder 2, **dadurch gekennzeichnet, dass** die Waage (1) eine Rückwand (26) aufweist und eine durch Durchführungen in der Rückwand (26) des Wägeraums (3) reichende Koppelanordnung (25) aufweist und dass ein Wägegutträger (8) vorhanden ist, der abnehmbar an der Koppelanordnung (25) angebracht ist.

4. Waage (1) nach Anspruch 3, **dadurch gekennzeichnet, dass** der Wägegutträger (8) einen Wägegutaufnahmeaufsatz (10) sowie eine Verstelleinrichtung aufweist, wobei der Wägegutaufnahmeaufsatz (10) im Wägeraum (3) bezüglich der Lage der Koppelanordnung (25) vermittels der Verstelleinrichtung des Wägegutträgers (8) translatorisch verschiebbar und in verschobener Lage positionierbar ist.

5. Waage (1) nach Anspruch 4, **dadurch gekennzeichnet, dass** die Ausrichtung und der Ort des Wägegutaufnahmeaufsatzes (10) im Wägeraum (3) bezüglich der Lage der Koppelanordnung (25) vermittels der Verstelleinrichtung des Wägegutträgers (8) durch eine translatorische Verschiebung und eine Rotation einstellbar ist.

6. Waage (1) nach einem der Ansprüche 4 bis 5, **dadurch gekennzeichnet, dass** am Wägegutaufnahmeaufsatz (10) eine verstellbare Halterung (13) für längliche Einwaagegefässe (11, 111), insbesondere in Form eines Haltebügels, anbringbar ist.

7. Waage (1) nach Anspruch 5 oder 6, **dadurch gekennzeichnet, dass** ein Einwaagegefäss (11, 111) mit einer Öffnung (14) zum Befüllen derart auf dem Wägegutaufnahmeaufsatz (10) platziert ist, dass das Einwaagegefäss (11, 111) bezüglich der Vertikalen schräg ausgerichtet ist, und dass die Öffnung (14) zum Befüllen sich ohne Berührungskontakt zur seitlichen Wand (5, 6), in unmittelbarer Nähe der Zugangsöffnung (15, 115) befindet, wobei bei geöffnetem Verschlusselement ein direkter Zugang durch die Zugangsöffnung (15, 115) zur Öffnung (14) zum Befüllen besteht.

8. Waage (1) nach einem der Ansprüche 1 bis 7, **dadurch gekennzeichnet, dass** das Verschlusselement zwei in einem Führungsschienenpaar (16) in einer Dimension bewegbare Schieber (17, 18) aufweist.

9. Waage (1) nach einem der Ansprüche 1 bis 7, **dadurch gekennzeichnet, dass** das Verschlusselement eine Irisblende (44) aufweist, die auf einem in einem Führungsschienenpaar (16) in einer Dimension bewegbare Schieber (117) angebracht ist, wobei der Schieber (117) im Bereich der Irisblende (44) eine Öffnung aufweist.

10. Waage (1) nach einem der Ansprüche 1 bis 9, **dadurch gekennzeichnet, dass** das Verschlusselement (17, 18, 44) zum Verschliessen der Zugangsöffnung (15, 115) motorisch bewegbar ist.

## Claims

1. Balance (1) with a draft shield (2) that surrounds a weighing compartment (3) and has at least one sidewall (5, 6) that can be designed to be slidable to allow the draft shield (2) to be opened and closed, **characterized in that** there is an access opening (15, 115) in the sidewall (5, 6), with a closure element (17, 18, 44) serving to close off the access opening (15, 115), wherein the size and/or position of the access opening (15, 115) in the sidewall (5, 6) can be varied by means of the closure element (17, 18, 44).

2. Balance (1) according to claim 1, **characterized in that** the closure element (17, 18, 44) is arranged on the outside of the sidewall (5, 6).

3. Balance (1) according to claim 1 or 2, **characterized in that** the balance (1) comprises a rear wall (26) and has a coupling arrangement (25) reaching through passage openings in the rear wall (26) of the weighing compartment (3) and that the balance (1) further has a weighing object carrier (8) which is removably attached to the coupling arrangement (25).

4. Balance (1) according to claim 3, **characterized in that** the weighing object carrier (8) has a weighing object receiver setup (10) as well as a position-adjusting device, wherein the weighing object receiver setup (10) is designed to allow translatory displacement within the weighing compartment (3) relative to the position of the coupling arrangement (25) by means of the position-adjusting device of the weighing object carrier (8) and to allow fixation of the weighing object receiver setup (10) in the displaced position.

5. Balance (1) according to claim 4, **characterized in that** the orientation and the location of the weighing object receiver setup (10) in the weighing compartment (3) in relation to the position of the coupling arrangement (25) are adjustable through a translatory displacement and a rotation by means of the position-adjusting device of the weighing object carrier (8).

6. Balance (1) according to claims 4 or 5, **characterized in that** an adjustable holder device (13), particularly in the form of a holder arm, for elongated weighing receptacles (11, 111) can be attached to the weighing object receiver setup (10).

7. Balance (1) according to claim 5 or 6, **characterized in that** a weighing receptacle (11, 111) with a fill opening (14) can be placed on the weighing object receiver setup (10) in such a way that the weighing receptacle (11, 111) is inclined at an oblique angle relative to the vertical direction and that the fill opening (14) is located immediately next to the access opening (15, 115) without touching the sidewall (5, 6), so that when the closure element is open, there is a direct access through the access opening (15, 115) to the fill opening (14).

8. Balance (1) according to one of the claims 1 to 7, **characterized in that** the closure element has two slides (17, 18) that are capable of one-dimensional movement in a pair of guide tracks (16).

9. Balance (1) according to one of the claims 1 to 7, **characterized in that** the closure element has an iris shutter (44) arranged on a sliding panel (117) that is movable one-dimensionally in a pair of guide tracks (16), wherein the sliding panel (117) has an opening in the area of the iris shutter (44).

10. Balance (1) according to one of the claims 1 to 9, **characterized in that** the closure element (17, 18, 44) can be driven by a motor in order to close the access opening (15, 115).

## Revendications

1. Balance (1) dotée d'un pare-brise (2), qui entoure un espace de pesée (3), et présente au moins une paroi (5, 6) latérale, qui est conçue de façon coulissante pour l'ouverture et la fermeture du pare-brise (2), **caractérisée en ce qu'**une ouverture d'accès (15, 115) et un élément de fermeture (17, 18, 44) pour la fermeture de l'ouverture d'accès (15, 115) sont présents dans la paroi (5, 6) latérale, la grandeur et/ou la position de l'ouverture d'accès (15, 115) dans la paroi latérale (5, 6) pouvant être modifiées au moyen de l'élément de fermeture (17, 18, 44).

2. Balance (1) selon la revendication 1, **caractérisée en ce que** l'élément de fermeture (17, 18, 44) est placé sur le côté extérieur de la paroi (5, 6) latérale.

3. Balance (1) selon la revendication 1 ou 2, **caractérisée en ce que** la balance (1) présente une paroi arrière (26) et présente un agencement de couplage (25) traversant des passages dans la paroi arrière (26) de l'espace de pesée (3) et **en ce qu'**un support d' objet à peser (8) est présent, lequel est placé de façon amovible sur l'agencement de couplage (25).

4. Balance (1) selon la revendication 3, **caractérisée en ce que** le support d'objet à peser (8) présente une construction de réception d'objet à peser (10) et un dispositif de réglage, la construction de réception d'objet à peser (10) pouvant être déplacé par translation dans l'espace de pesée (3) par rapport à la position de l'agencement de couplage (25) au moyen du dispositif de réglage du support d'objet à peser (8) et pouvant être positionné dans la position déplacée.

5. Balance (1) selon la revendication 4, **caractérisée en ce que** l'orientation et le lieu de la construction de réception d'objet à peser (10) dans l'espace de pesée (3) par rapport à la position de l'agencement de couplage (25) peuvent être réglés au moyen du dispositif de réglage du support d'objet à peser (8) par un déplacement de translation et une rotation.

6. Balance (1) selon l'une quelconque des revendications 4 à 5, **caractérisée en ce qu'**un support (13) réglable pour des récipients de pesage (11, 111), en particulier sous forme d'un étrier de retenue, peut être placé sur la construction de réception d'objet à peser (10).

7. Balance (1) selon la revendication 5 ou 6, **caractérisée en ce qu'**un récipient de pesage (11, 111) avec une ouverture (14) pour le remplissage est placé sur la construction de réception d'objet à peser (10) de telle sorte que le récipient de pesage (11, 111) est orienté en biais par rapport à la verticale, et **en ce que** l'ouverture (14) pour le remplissage se trouve sans contact avec la paroi (5, 6) latérale, à proximité immédiat de l'ouverture d'accès (15, 115), un accès direct par l'ouverture d'accès (15, 115) pour l'ouverture (14) pour le remplissage existant lorsque l'élément de fermeture est ouvert.

8. Balance (1) selon l'une quelconque des revendications 1 à 7, **caractérisée en ce que** l'élément de fermeture présente deux coulisseaux (17, 18) pouvant être déplacés dans une dimension dans une paire de rails de guidage (16).

9. Balance (1) selon l'une quelconque des revendications 1 à 7, **caractérisée en ce que** l'élément de fermeture présente un diaphragme à iris (44), qui est placé sur un coulisseau (117) pouvant être déplacé dans une dimension dans une paire de rails de guidage (16), le coulisseau (117) présentant une ouverture dans la zone du diaphragme à iris (44).

10. Balance (1) selon l'une quelconque des revendications 1 à 9, **caractérisée en ce que** l'élément de fermeture (17, 18, 44) pour la fermeture de l'ouverture d'accès (15, 115) peut être déplacé par moteur.
